# EUROPEAN PATENT SPECIFICATION

(11) **EP 2 982 532 B1**
(45) Date of publication and mention of the grant of the patent: **25.04.2018**
(21) Application number: 15179721.4
(22) Date of filing: 04.08.2015
(51) Int. Cl.: B60K 11/04

(54) **WORK VEHICLE**
ARBEITSFAHRZEUG
VEHICULE DE TRAVAIL

(30) Priority: 04.08.2014 JP 2014158351
(43) Date of publication of application: 10.02.2016
(73) Proprietor: Kubota Corporation, Osaka-shi, Osaka 556-8601 (JP); AVL List GmbH, 8020 Graz (AT)
(72) Inventor: INAOKA, Motonari, SAKAI-SHI, OSAKA, 590-0823 (JP); SHIMIZU, Toshihide, SAKAI-SHI, OSAKA, 590-0823 (JP); ORTH, Werner, 51515 KUERTEN (DE)
(74) Representative: Intès, Didier Gérard André

(56) References cited:
- EP-A1- 1 450 019
- EP-A2- 1 707 420
- JP-A- H0 989 488
- US-A1- 2006 005 943
- US-A1- 2012 181 818

## Description

### BACKGROUND OF THE INVENTION

### Field of the Invention

The present invention relates to a work vehicle in which a cooling system has a coolant fluid radiator, and a cooling unit adjacent to and facing the coolant fluid radiator.

### Description of Related Art

In the cooling system described above, it is necessary to move either the coolant fluid radiator or the cooling unit to create a clearance in between the coolant fluid radiator and the cooling unit for maintenance purposes. For example, in a cooling system according to U.S. Patent No. 8,342,277, a second radiator is movably attached to a first radiator via a first connector and a second connector. The first connector is a swing link mechanism having a slide mechanism and connects upper portions of the first radiator and the second radiator. The second connector is a slide mechanism and connects lower portions of the second radiator and the second radiator. Thus, the upper portion of the second radiator can be significantly separated from the upper portion of the first radiator by swing displacement and slide displacement, and the lower portion of the second radiator can be slightly separated from the bottom portion of the first radiator by slide displacement. As a result, a hand may be inserted between the first radiator and the second radiator. However, such a cooling system requires a swing link mechanism having a slide mechanism and a slide mechanism in order to attach the second radiator to the first radiator, and such an attachment structure is complicated and occupies a large space. A slide mechanism having a long hole and pin, in particular, not only increases manufacturing costs but has the disadvantage of foreign materials easily lodging in the long hole. Other known cooling systems were disclosed in European patent application publications EP 1 707 420 A2 and generic EP 1 450 019 A1, in Japanese patent application Laid-Open JP H09 89488, and in US patent application publications US 2006/005943 A1 and US 2012/181818 A1.

In view of the situation above, the present invention provides a technology in which a space for maintenance/inspection purposes is easily created between a coolant fluid radiator and a cooling unit configuring a cooling system for work vehicles.

### SUMMARY OF THE INVENTION

A working vehicle according to one aspect of the present invention has a vehicle body frame, an engine mounted to the vehicle body frame, a cooling fan unit provided on one side of the engine, a coolant fluid radiator provided on the opposite side of the cooling fan unit with respect to the engine, a cooling unit provided on an opposite side of the coolant fluid radiator with respect to the cooling fan unit, and a link mechanism connected to the cooling unit and configured to allow a distance between the cooling unit and the coolant fluid radiator to be changed. Further, the link mechanism comprises a pair of first link members and a pair of second link members, and the cooling unit has a first cooler and a second cooler.

According to this aspect, the work vehicle further comprises a connecting unit swingably connecting, about a swing axis, the bottom of the first cooler to the top of the second cooler.

The pair of first link members may have first ends connected to the coolant fluid radiator at first support points and second ends connected to the first cooler at second support points, and the pair of second link members may have first ends connected to the coolant fluid radiator at third support points and second ends connected to the first cooler at a fourth support points.

In one preferred embodiment of the working vehicle above, the cooling fan unit above is arranged in one direction of an anteroposterior direction of the vehicle body with respect to the engine.

In another preferred embodiment of any one of the working vehicles above, the coolant fluid radiator is arranged on a side of the cooling fan unit opposite a side facing to the engine.

In another preferred embodiment of any one of the working vehicles above, the cooling unit is arranged on a side of the coolant fluid radiator opposite a side facing the cooling fan unit.

In another preferred embodiment of any one of the working vehicles above, the link mechanism is connected to the cooling unit such that a distance between the cooling unit and the coolant fluid radiator in the anteroposterior direction of the vehicle body can be changed.

In another preferred embodiment of any one of the working vehicles above, the link mechanism is configured as a four-link mechanism having a pair of right-and-left upper links and a pair of right-and-left lower links. By installing the four-link mechanism between the coolant fluid radiator and the cooling unit, the cooling unit is swingably supported by the coolant fluid radiator. By swinging the cooling unit using the four-link mechanism, a space is formed between the coolant fluid radiator and the cooling unit, thereby facilitating maintenance/inspection of cooling surfaces thereof. As an additional advantage, the four-link mechanism is simple in structure and low in manufacturing costs.

According to a preferred embodiment of the work vehicle mentioned above, the pair of first link members has right-and-left upper link members, and the pair of second link members has right-and-left lower link members.

According to a preferred embodiment of any one of the work vehicles mentioned above, the cooling unit is arranged in front of the coolant fluid radiator. In addition to that or alternatively, the engine is preferably arranged in a front of the vehicle body frame.

According to a preferred embodiment of any one of the work vehicles mentioned above, the link mechanism is further connected to the coolant fluid radiator.

According to a preferred embodiment of any one of the work vehicles mentioned above, the first cooler may be an upper cooler and the second cooler is a lower cooler arranged below the upper cooler.

According to a further preferred embodiment of any one of the work vehicles mentioned above, the link mechanism has ends connected to the upper cooler so as to allow the upper cooler to move relative to the coolant fluid radiator, between a first position and an angled second position that spaced from the coolant fluid radiator more than in the first position.

According to another further preferred embodiment of any one of the work vehicles mentioned above, the link mechanism has ends connected to the upper cooler so as to allow the upper cooler to move, relative to the coolant fluid radiator, between a first position and a second position. In the first position, both the upper and lower coolers are oriented generally parallel to the coolant fluid radiator. In the second position, the upper cooler is oriented non-parallel to the coolant fluid radiator and the lower cooler is oriented generally parallel to the coolant fluid radiator.

According to a further preferred embodiment of any one of the work vehicles mentioned above, the second cooler is disposed below the first cooler.

According to a preferred embodiment of any one of the work vehicles mentioned above where the connecting unit swingably connects the first cooler and the second cooler about a swing axis, the swing axis is transverse to a front to back axis of the vehicle body frame.

According to a preferred embodiment of any one of the work vehicles mentioned above the cooling unit further comprises a third cooler disposed on side of the second cooler that is opposite a side facing the coolant fluid radiator. More preferably, said third cooler is connected to a bottom end of the first cooler.

According to a preferred embodiment of any one of the work vehicles mentioned above where the pair of first link members has first ends connected to the coolant fluid radiator at first support points and second ends connected to the first cooler at second support points and the pair of second link members has first ends connected to the coolant fluid radiator at third support points, and second ends connected to the first cooler at a fourth support points, the first and second ends of the first link members are swingably connected to the coolant fluid radiator and the first cooler, respectively. In addition or alternatively, the first and second ends of the second link members are swingably connected to the coolant fuid radiator and the first cooler, respectively.

According to a further preferred embodiment of any one of the work vehicles mentioned above where the pair of first link members has first ends connected to the coolant fluid radiator at first support points and second ends connected to the first cooler at second support points and the pair of second link members has first ends connected to the coolant fluid radiator at third support points, and second ends connected to the first cooler at a fourth support points, a distance between the first and third support points is shorter than a distance between the second and fourth support points.

According to a further preferred embodiment of any one of the work vehicles mentioned above where the pair of first link members has first ends connected to the coolant fluid radiator at first support points and second ends connected to the first cooler at second support points and the pair of second link members has first ends connected to the coolant fluid radiator at third support points, and second ends connected to the first cooler at a fourth support points, a distance between the first and second support points is preferably shorter than a distance between the third and fourth support points.

According to a further preferred embodiment of any one of the work vehicles mentioned above where the pair of first link members has first ends connected to the coolant fluid radiator at first support points and second ends connected to the first cooler at second support points and the pair of second link members has first ends connected to the coolant fluid radiator at third support points, and second ends connected to the first cooler at a fourth support points, a distance between the second and fourth is shorter than at least one of a distance between the first and second support points and a distance between the third and fourth support points. It is more preferable that the distance between the second and fourth support points is shorter than each of the distance between the first and second support points and the distance between the third and fourth support points.

In another preferred embodiment of any one of the work vehicles mentioned above, the first cooler is provided in an upper half area of the coolant fluid radiator and the second cooler is provided in a lower half area of the coolant fluid radiator. The first cooler is connected to the coolant fluid radiator via the link mechanism. A bottom end of the first cooler and an upper end of the second cooler are connected via the connecting unit.

In this configuration, the first cooler and the second cooler are provided facing opposite a cooling surface of the coolant fluid radiator having favorable circulation of cooling air. Thereby cooling air can pass through the two types of coolers in an efficient manner. It is preferable to adapt, as the connecting unit, a swinging connection unit which swingably connects the first cooler and the second cooler about a swing axis in a transverse direction of the vehicle body. Thereby the second cooler is able to maintain an upright posture despite an inclined posture of the first cooler. When the second cooler has an inclined posture in tandem with the first cooler, the bottom end of the second cooler is significantly separated from the coolant fluid radiator. This leads to a swing space of the second cooler becoming too large. The swingable connection of the first cooler and the second cooler resolves this disadvantage.

The cooling unit is preferably equipped with a third cooler in addition to the first cooler and the second cooler. The third cooler is preferably provided on the opposite side of the second cooler with respect to the coolant fluid radiator. The third cooler is preferably connected to the bottom end of the first cooler. As a result, the third cooler is provided across from the coolant fluid radiator with the second cooler in between. That is, the cooling surface of the coolant fluid radiator and a first cooling surface of the second cooler, and a second cooling surface of the second cooler and an inner cooling surface of the third cooler are nearly parallel and positioned in immediate proximity to one another. During maintenance or inspection, by swinging the first cooler into an inclined posture, the third cooler has a similar inclined posture following along an extension from the first cooler. In contrast, the second cooler maintains an upright posture. Thus, a space is formed in between the cooling surface of the coolant fluid radiator and the first cooling surface of the second cooler, and the second cooling surface of the second cooler and the inner cooling surface of the third cooler. Thereby maintenance and/or inspection is easier.

For maintenance and/or inspection purposes, it is desired to have an appropriate swing posture of the cooling unit with respect to the coolant fluid radiator with the minimum distance between the cooling surfaces and to have the space provided for the cooling system as constraints thereto. It is preferably that a length between each support point of the upper links and the lower links on the coolant fluid radiator side is shorter than a length between each support point of the upper links and the lower links on the cooling unit side. In addition, it is further preferable that a length between the support points of the upper links on the coolant fluid radiator side and the support points on the cooling unit side is shorter than a length between the support points of the lower links on the coolant fluid radiator side and the support points on the cooling unit side. Further, by adjusting the length between each support point of the lower links and the upper links on the cooling unit side shorter than the length between the support points of the upper links on the coolant fluid radiator side and the support points on the cooling unit side, an efficient use of space and ease of maintenance and/or inspection is achieved.

The cooling unit preferably includes a first cooler provided opposite an upper half area of the coolant fluid radiator. It is preferable that the cooling unit further includes a second cooler provided on a lower side of the first cooler so as to be opposite a lower half area of the coolant fluid radiator. With this configuration, the coolers are effectively arranged in a double stack manner on the upper and lower half areas of the coolant fluid radiator.

Further, it is preferable that the cooling unit further includes a third cooler provided on the opposite side of the second cooler with respect to the coolant fluid radiator, that is, a forward side of the second cooler. With this configuration, the coolers are effectively arranged in a triple stack manner.

The first cooler is preferably swingably supported by the coolant fluid radiator via the link mechanism. A first end of the pair of upper links is preferably swingably connected to a lateral surface of the coolant fluid radiator at a first support point. A second end is preferably swingably connected to a lateral surface of the first cooler at a second support point. Similarly, a first end of the pair of lower links is preferably swingably connected to the lateral surface of the coolant fluid radiator at a third support point. A second end is preferably swingably connected to the lateral surface of the first cooler at a fourth support point. In this example, a first swing posture is a state where the first, second, and third coolers during normal use of the cooling system are in a near-upright posture. On the other hand, a second swing posture is a state where the first cooler is swung by the link mechanism to create a space between the coolant fluid radiator and the coolers.

It is preferable that the third cooler is supported such that the third cooler is offset forward of the first cooler by a difference in anteroposterior direction width between the first cooler and the second cooler. With this configuration, it is possible to arrange the three coolers without creating any wasted space. In addition, it is preferable that the third cooler is supported by a fixed bracket extending forward from a bottom end of the first cooler. With this configuration, the relative positional relationship between the first cooler and the third cooler is not changed by the swing of the link mechanism. Thus, in the second swing posture of the link mechanism, the third cooler is positioned following along an extension from the inclined first cooler. As a result, a bottom end of the third cooler and a bottom end of the second cooler are separated by a distance proportionate to the angle of the second swing posture. Thereby a favorable clearance can be achieved for maintenance and/or inspection purposes between the rear surface of the third cooler and the front surface of the second cooler. Accordingly, in the first swing posture of the link mechanism, the third cooler, which is forward of the second cooler, may have a posture such that a clearance is formed between the rear surface of the third cooler and the front surface of the second cooler. Additionally, the rear surface of the third cooler and the front surface of the second cooler are substantially parallel.

It is preferable that a bottom end of the first cooler and a top end of the second cooler are serially connected in a vertical direction by a connecting unit. Accordingly, the first cooler and the second cooler may be arranged in an effective manner. It is preferable that the connecting unit is configured as a swing connecting mechanism having a swing axis which extends in a transverse direction. With this configuration, in the second swing posture, a space is naturally created between the second cooler and the third cooler. Accordingly, in the first swing posture of the link mechanism, the second cooler is positioned almost directly below the first cooler due to gravity. In addition, a rear surface of the first cooler and a rear surface of the second cooler form substantially a single surface which is in immediate proximity to a front surface of the coolant fluid radiator. In the second swing posture of the link mechanism, the posture of the first cooler is inclined such that the bottom end is separated from the coolant fluid radiator in the forward direction. At this point, the second cooler has a posture such that it is vertically suspended from the first cooler by the connecting unit and gravity, and the rear surface of the second cooler and the front surface of the coolant fluid radiator are nearly parallel. That is, the distance from the coolant fluid radiator to the bottom end of the first cooler is substantially maintained throughout the height of the second cooler. This ensures a favorable clearance for maintenance and/or inspection purposes between the coolant fluid radiator and the second cooler.

The distance between the first cooler and the coolant fluid radiator and the angle of the first cooler relative to the coolant fluid radiator, which are formed upon the swing of the link mechanism, are preferably determined by the configuration of the link mechanism. Excessive distance or angle leads to interference with other devices, and therefore it is preferable that such distance and angle are selected appropriately.

According to a preferred embodiment of any one of the work vehicles mentioned above, it is preferable that d2>d1 is established, where d1 is the distance between the first and the third support points and d2 is the distance between the second and fourth support points. With this configuration, the inclination may be made so as to further expand the space between the first cooler and the second cooler. It is further preferable that d4>d3 is established. Here, d3 is the distance between the first and the second support points, and d4 is the distance between the third and fourth support points (in other words, d3 is the length of the upper links, and d4 is the length of the lower links). Accordingly, the inclination angle can be made larger. In addition, it is preferable that d3>d2 is established. Accordingly, the ease of maintenance can be improved. Even more preferably, when all of the above conditions are met, d4>d3>d2>d1 is established. In the configuration of the cooling system, a sufficient clearance for maintenance and/or inspection purposes can be ensured while inhibiting interference with other devices.
It is preferable that the first cooler is an air intercooler. Accordingly, the compressed air can be effectively cooled. It is also preferable that the second cooler is an oil cooler. Accordingly, the oil can be effectively cooled. It is also preferable that the third cooler is an AC (air conditioner) condenser. Accordingly, the refrigerant can be effectively cooled.

When the first cooler swings forward using the four-link mechanism, a trapezoidal space as viewed from the side is created by a first cooling surface, which is the rear surface of the first cooler, and a cooling surface on a cooling unit side (entire surface) of the coolant fluid radiator. The pipe portion extending from the first cooler is preferably curved so as to allow this swing. Additionally, a damper is preferably provided between the coolant fluid radiator and the first cooler so that the first cooler swings smoothly, and so as to avoid a rapid downward swing.

The first cooler and the second cooler are swingably connected by the connecting unit. It is preferable that the connecting unit has an integrated first bracket and second bracket. With this configuration, the third cooler can be easily installed. It is preferable that the first bracket is fixed to a bottom surface of the first cooler and also has a swing pin mechanism to swingably suspend the second cooler. Accordingly, it is possible to ensure, with a simple configuration, a favorable clearance for maintenance/inspection purposes between the rear surface of the third cooler and the front surface of the second cooler. The second bracket is a bracket extending downward to secure and support the third cooler. While not shown in the drawing, a cushion is preferably provided on a bottom portion of the second bracket to soften contact with the second cooler. With this configuration, the first swing posture can be restored without any impact.

During normal use of the cooling system, the first cooler, second cooler, and third cooler are in a near-upright posture. In this state, almost no clearances are formed between the first cooling surface of the first cooler and the (cooling unit side) cooling surface of the coolant fluid radiator; the second cooling surface of the second cooler and the (cooling unit side) cooling surface of the coolant fluid radiator; and the second cooling surface of the first cooler and the first cooling surface of the third cooler. In this state, in order to secure the second cooler to the coolant fluid radiator so as to be removable, it is preferable to provide a metal fastener. For the metal fastener, a metal snap is preferably provided.

Further, it is preferable that a gate-shaped vertical support stands forward of the third cooler, and a lateral support is provided which connects a top portion of the vertical support and the partition wall frame. Accordingly, these coolers are firmly secured. It is preferable that a fuel cooler can be attached to a bottom portion of the lateral support. Accordingly, the fuel can be effectively cooled. Further, it is preferable that a work machine cooler is attached to a bottom portion of the vertical support. Accordingly, the work machine cooler can be effectively arranged in an available space.

### BRIEF DESCRIPTION OF THE DRAWINGS

The present invention is further described in the detailed description which follows, in reference to the noted plurality of drawings by way of non-limiting examples of exemplary embodiments of the present invention, in which like reference numerals represent similar parts throughout the several views of the drawings, and wherein:
Figs. 1A and 1B are schematic diagrams illustrating a basic configuration of a cooling system in a work vehicle according to the present invention;
Fig. 2 is a side view of a tractor according to an embodiment of the present invention;
Fig. 3 is a perspective view of the cooling system;
Fig. 4 is a side view illustrating a posture of the cooling system during use; and
Fig. 5 is a side view illustrating the posture of the cooling system during maintenance/inspection.

### DETAILED DESCRIPTION OF THE INVENTION

The particulars shown herein are by way of example and for purposes of illustrative discussion of the embodiments of the present invention only and are presented in the cause of providing what is believed to be the most useful and readily understood description of the principles and conceptual aspects of the present invention. In this regard, no attempt is made to show structural details of the present invention in more detail than is necessary for the fundamental understanding of the present invention, the description taken with the drawings making apparent to those skilled in the art how the forms of the present invention may be embodied in practice.

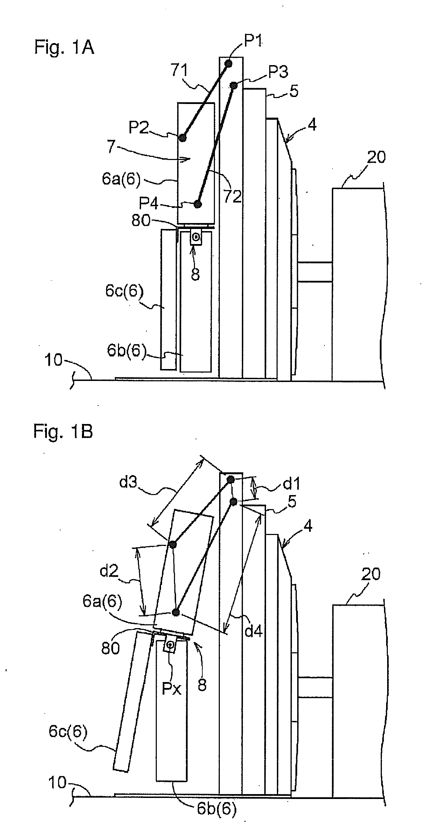

Before describing an embodiment of a work vehicle according to the present invention and specifically a cooling system thereof, a basic configuration of the cooling system is described with reference to Figs. 1A and 1B. The cooling system utilizes cooling air which passes through a cooling fan unit 4, the cooling fan unit 4 cooling an engine 20 mounted on a vehicle body frame 10. For ease of description, with reference to Figs. 1A and 1B, the arrangement of each component is explained with the left side of the drawing being the front, and the right side of the drawing being the rear. However, the anteroposterior direction here is unrelated to the anteroposterior direction of the work vehicle (the lengthwise direction of the work vehicle). In other words, the present invention is not limited to the engine 20 being provided forward of the cooling fan unit 4 in the anteroposterior direction of the working vehicle (the lengthwise direction of the vehicle body). The present invention may also include a configuration in which the cooling fan unit 4 is or is not provided forward of the engine 20 and a configuration in which the anteroposterior direction of each device configuring the cooling system is selected freely.

In Figs. 1A and 1B, the cooling fan unit 4 is attached to a rear surface of a coolant fluid radiator 5. A cooling unit 6 is provided near the front of the coolant fluid radiator 5. The cooling unit 6 is supported by the coolant fluid radiator 5 via a link mechanism 7, such that the cooling unit 6 is swingable in the anteroposterior direction. Fig. 1A illustrates a first swing posture of the link mechanism 7, in which the cooling unit 6 is in a nearly vertical posture and the cooling unit 6 is adjacent to the coolant fluid radiator 5. Fig. 1B illustrates a second swing posture of the link mechanism 7, in which the cooling unit 6 is separated from the coolant fluid radiator 5. This allows for a maintenance person to insert a hand in between the cooling unit 6 and the coolant fluid radiator 5.

The link mechanism 7 is a four-link mechanism having a left/right pair of upper links 71 and a left/right pair of lower links 72. By selecting the appropriate link length and distance between support points, it is possible to select an optimum swing posture of the cooling unit 6 with respect to the coolant fluid radiator 5.

In the example shown in Figs. 1A and 1B, the cooling unit 6 includes a first cooler 6a provided opposite an upper half area of the coolant fluid radiator 5, a second cooler 6b provided on a lower side of the first cooler 6a so as to be opposite a lower half area of the coolant fluid radiator 5, and a third cooler 6c provided on the opposite side of the second cooler 6b with respect to the coolant fluid radiator 5, that is, a forward side of the second cooler 6b. The first cooler 6a is swingably supported by the coolant fluid radiator 5 via the link mechanism 7. A first end of the left/right pair of upper links 71 is swingably connected to a lateral surface of the coolant fluid radiator 5 at a first support point P1, and a second end is swingably connected to a lateral surface of the first cooler 6a at a second support point P2. Similarly, a first end of the left/right pair of lower links 72 is swingably connected to the lateral surface of the coolant fluid radiator 5 at a third support point P3, and a second end is swingably connected to the lateral surface of the first cooler 6a at a fourth support point P4. The third cooler 6c is supported by a fixed bracket 80 extending forward from a bottom end of the first cooler 6a, such that the third cooler 6c is offset in the forward direction by a difference in anteroposterior direction width between the first cooler 6a and the second cooler 6b. Accordingly, in the first swing posture of the link mechanism 7 shown in Fig. 1B, the third cooler 6c, which is forward of the second cooler 6b, has a posture such that a slight clearance is formed between a rear surface of the third cooler 6c and a front surface of the second cooler 6b. Additionally, the rear surface of the third cooler 6c and the front surface of the second cooler 6b are substantially parallel.

A bottom end of the first cooler 6a and a top end of the second cooler 6b are serially connected in a vertical direction by a connecting unit 8. In Fig. 1B, the connecting unit 8 is configured as a swing connecting mechanism having a swing axis Px which extends in a transverse direction (perpendicular direction in the drawing). Accordingly, in the first swing posture of the link mechanism 7 shown in Fig. 1A, the second cooler 6b is positioned almost directly below the first cooler 6a due to gravity, and a rear surface of the first cooler 6a and a rear surface of the second cooler 6b form substantially a single surface which is in immediate proximity to a front surface of the coolant fluid radiator 5. In the second swing posture of the link mechanism 7 shown in Fig. 1B, the posture of the first cooler 6a is inclined such that the bottom end is separated from the coolant fluid radiator 5 in the forward direction. At this point, the second cooler 6b has a posture such that it is vertically suspended from the first cooler 6a by the connecting unit 8 and gravity, and the rear surface of the second cooler 6b and the front surface of the coolant fluid radiator 5 are nearly parallel. That is, the distance from the coolant fluid radiator 5 to the bottom end of the first cooler 6a is substantially maintained throughout the height of the second cooler 6b, ensuring a favorable clearance for maintenance/inspection purposes between the coolant fluid radiator 5 and the second cooler 6b.

The relative positional relationship between the first cooler 6a and the third cooler 6c is not changed by the swing of the link mechanism 7. Thus, in the second swing posture of the link mechanism 7 shown in Fig. 1B, the third cooler 6c is positioned following along an extension from the inclined first cooler 6a. As a result, a bottom end of the third cooler 6c and a bottom end of the second cooler 6b are separated by a distance proportionate to the angle of the second swing posture, ensuring a favorable clearance for maintenance/inspection purposes between the rear surface of the third cooler 6c and the front surface of the second cooler 6b.

The distance between the first cooler 6a and the coolant fluid radiator 5 and the angle of the first cooler 6a relative to the coolant fluid radiator 5, which are formed upon the swing of the link mechanism 7, are determined by the configuration of the link mechanism 7. Excessive distance or angle leads to interference with other devices, and therefore such distance and angle must be selected appropriately. As shown in Fig. 1B, an embodiment of the present invention is proposed in which d4>d3 and d2>d1 is established, where d3 is the distance between the first support point P1 and the third support point P3, d4 is the distance between the second support point P2 and the fourth support point P4, d2 is the length of the upper links 71, and d4 is the length of the lower links 72. Further, by adding a condition that d3>d2, the above relationship becomes d4>d3>d2>d1, and in the configuration of the cooling system shown in Figs. 1A and 1B, a sufficient clearance for maintenance/inspection purposes can be ensured while inhibiting interference with other devices.

Fig. 1A further illustrates a preferable arrangement of the link mechanism 7, which shows positional relationships between the first support point P1, the second support point P2, the third support point P3, and the fourth support point P4 in the anteroposterior direction of the vehicle body when the cooling unit 6 and the link mechanism 7 are viewed from a lateral side of the vehicle body. More particularly, in reference to the first support point P1, the third support point P3 is closer to the engine 20 than the first support point P1, and the second support point P2 and the fourth support point P4 are farther from the engine 20 than the first support point P1. The second support point P2 is farther from the engine 20 than the fourth support point P4. In other words, the second support point P2, the fourth support point P4, the first support point P1, and the third support point P3 are arranged from the front to the rear of the vehicle body in the mentioned order. This arrangement also provides a favourable distance between the first cooler 6a and the coolant fluid radiator 5 and a favourable angle of the first cooler 6a relative to the coolant fluid radiator 5.

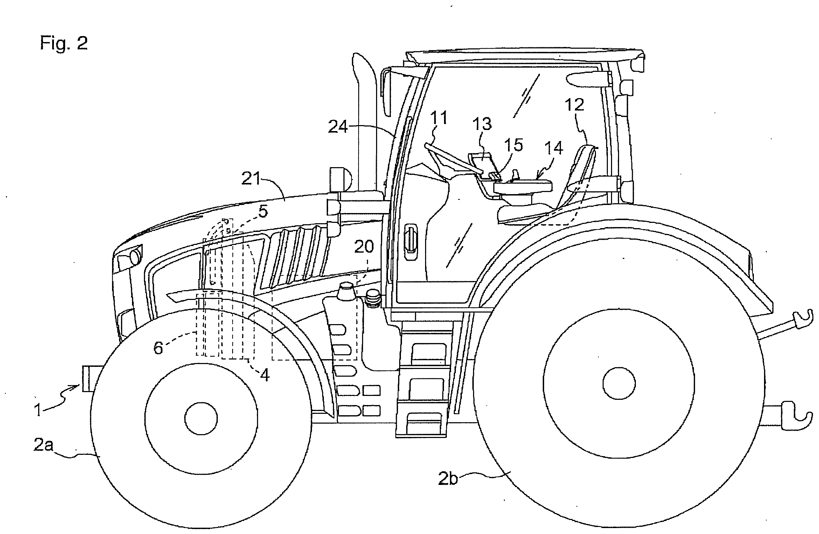

Next, a tractor, which is an embodiment of a work vehicle according to the present invention, is described with reference to the drawings. Fig. 2 is a side view of the tractor. The tractor includes the engine 20, which is mounted in a front portion of a vehicle body 1 of the tractor supported by front wheels 2a and rear wheels 2b, and a transmission (not shown in the drawings) is provided rearward of the engine 20. The tractor is a four-wheel-drive vehicle in which the power of the engine 20 is conveyed to the front wheels 2a and the rear wheels 2b, which are capable of performing as drive wheels, via a transmission mechanism built into the transmission. The engine 20 is covered by a hood 21. A cabin 24 is provided rearward of the hood 21.

The interior of the cabin 24 serves as an operator's compartment, with a steering handle 11 provided in a front portion to steer the front wheels 2a and an operator's seat 12 provided in a rear portion between a left/right pair of rear wheel fenders. An armrest controller 14 having a multi-function console 15 is provided along a side and up to forward of the operator's seat 12. A display 13 which visually notifies the operator of various information is provided forward of the armrest controller 14.

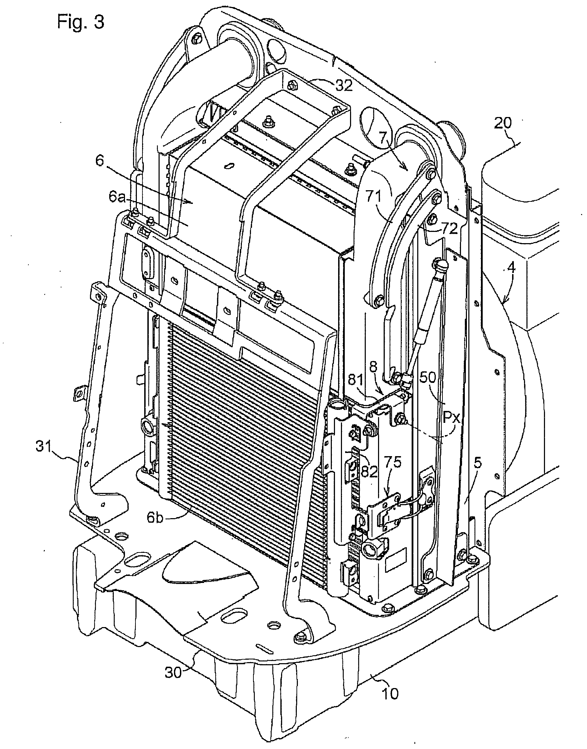

As shown in Fig. 2, in this embodiment, the cooling fan unit 4, coolant fluid radiator 5, and cooling unit 6, which configure the cooling system, are provided forward of the engine 20. As shown in detail in Figs. 3, 4, and 5, this cooling system is in accordance with the basic configuration shown in Figs. 1A and 1B. Thus, the explanation provided for Figs. 1A and 1B is also applicable here.

The coolant fluid radiator 5 stands on a base plate 30 which is fixed to a vehicle body frame 10, and the cooling fan unit 4 is attached on a rear side of the coolant fluid radiator 5. A cooling surface 51 on a fan side (rear surface) of the coolant fluid radiator 5 is substantially parallel with and adjacent to a rotation trajectory plane of a fan of the cooling fan unit 4. A panel-shaped partition wall frame 50 stands on the left, right, and top surfaces of the coolant fluid radiator 5, and such partition wall frame 50, in conjunction with the hood 21, separates the engine compartment and cooling system.

In this embodiment, too, the cooling unit 6 includes the first cooler 6a, second cooler 6b, and third cooler 6c. The first cooler 6a is an air intercooler, the second cooler 6b is an oil cooler, and the third cooler 6c is an AC (air conditioner) condenser.

The coolant fluid radiator 5 and the first cooler 6a are swingably connected by the four-link mechanism 7. The upper links 71 of the four-link mechanism 7 form an arc-like shape which imitates an exterior shape of a pipe portion extending from the first cooler 6a. The lower links 72 of the four-link mechanism 7 include an arc-shaped portion similar to the upper links 71 and a linear portion extending downward. First ends of the upper links 71 and lower links 72 are swingably supported by the lateral surface of the coolant fluid radiator 5 via brackets, and second ends of the upper links 71 and lower links 72 are swingably supported by the lateral surface of the first cooler 6a via swing pin bolts.

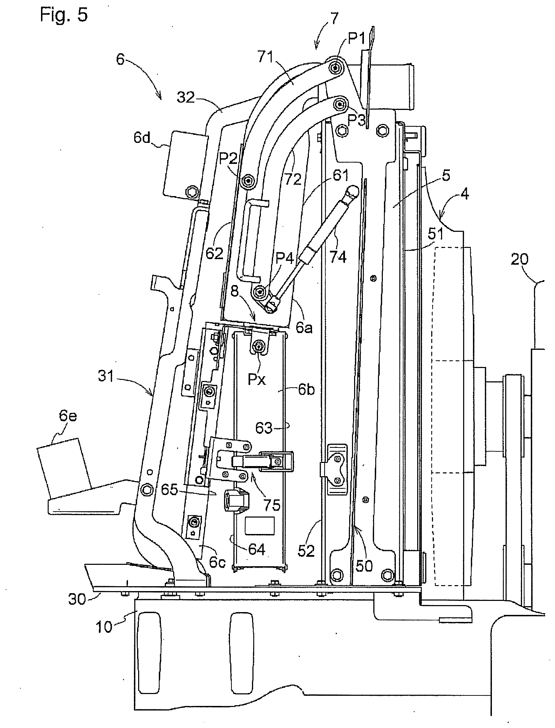

As shown in Fig. 5, when the first cooler 6a swings forward using the four-link mechanism 7, a trapezoidal space as viewed from the side is created by a first cooling surface 61, which is the rear surface of the first cooler 6a, and a cooling surface 52 on a cooling unit 6 side (entire surface) of the coolant fluid radiator 5. The pipe portion extending from the first cooler 6a is curved so as to allow this swing. Additionally, a damper 74 is provided between the coolant fluid radiator 5 and the first cooler 6a so that the first cooler 6a swings smoothly, and so as to avoid a rapid downward swing.

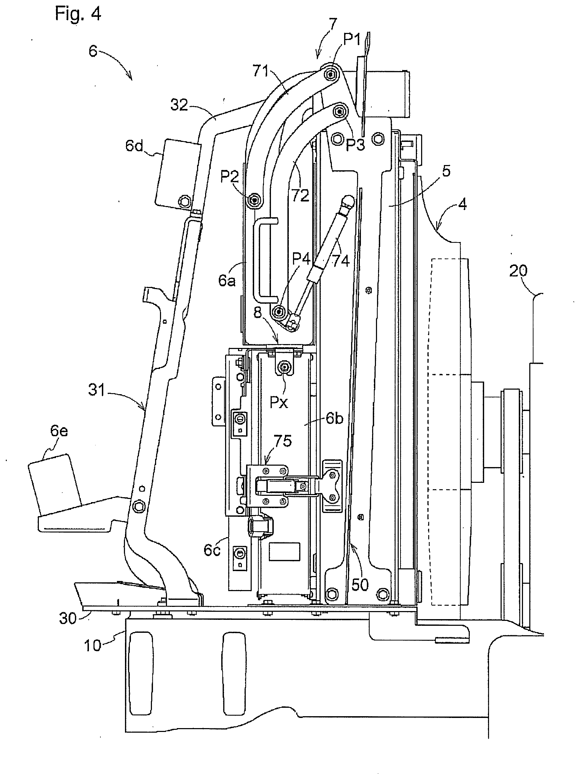

Referring to Fig. 4, each upper link 71 is shaped as an arc plate curved upward toward the coolant fluid radiator 5, and each lower link 72 has an upper half shaped as an arc portion curved upward toward the coolant fluid radiator 5 and a lower half shaped as a straight-line-profile portion. This configuration allows the lower links 72 to create a wide space compared with links having an overall straight-line profile to linearly connect the third support point P3 to the fourth support point P4. The upper links 71 also create a similar wide space in which the arc portions of the lower links 72 can fit. As shown in Fig. 5, this arrangement allows a space between the first cooling surface 61 of the first cooler 6a swung forward by the four-link mechanism 7 and the cooling surface 52 of the coolant fluid radiator 5 adjacent to the cooling unit to extend near the third support point P3, which provides easy access to the first cooling surface 61 and the cooling surface 52 for maintenance and inspection.

The first cooler 6a and the second cooler 6b are swingably connected by the connecting unit 8. The connecting unit 8 has an integrated first bracket 81 and second bracket 82. The first bracket 81 is fixed to a bottom surface of the first cooler 6a and also has a swing pin mechanism to swingably suspend the second cooler 6b. The second bracket 82 is a bracket extending downward to secure and support the third cooler 6c. While not shown in the drawing, a cushion is provided on a bottom portion of the second bracket 82 to soften contact with the second cooler 6b.

Even in the inclined state (swing state) of the first cooler 6a as illustrated in Fig. 5, the second cooler 6b maintains an upright posture due to gravity. Thus, a space is formed between a second cooling surface 62 of the second cooler 6b and the (cooling unit side) cooling surface 52 of the coolant fluid radiator 5. Similarly, a space is also formed between a second cooling surface 64 of the first cooler 6a and a first cooling surface 65 of the third cooler 6c.

During normal use of the cooling system as shown in Fig. 4, the first cooler 6a, second cooler 6b, and third cooler 6c are in a near-upright posture, and almost no clearances are formed between the first cooling surface 61 of the first cooler 6a and the (cooling unit side) cooling surface 52 of the coolant fluid radiator 5; the second cooling surface 62 of the second cooler 6b and the (cooling unit side) cooling surface 52 of the coolant fluid radiator 5; and the second cooling surface 64 of the first cooler 6a and the first cooling surface 65 of the third cooler 6c. In this state, in order to secure the second cooler 6b to the coolant fluid radiator 5 so as to be removable, a metal fastener 75, or other releasable securing mechanism, or preferably a metal snap, is provided.

Further, as shown in Fig. 3, a gate-shaped vertical support 31 stands forward of the third cooler 6c, and a lateral support 32 is provided which connects a top portion of the vertical support 31 and the partition wall frame 50. While illustrated only in Fig. 5, a fuel cooler 6d can be attached to a bottom portion of the lateral support 32, and a work machine cooler 6e is attached to a bottom portion of the vertical support 31.

### Other Embodiments

(1) In the tractor embodiment above, the engine 20 is provided forward of the operator's seat 12, and the cooling fan unit 4, coolant fluid radiator 5, and cooling unit 6 are provided forward of the engine 20, in that order. Alternatively, the cooling fan unit 4, coolant fluid radiator 5, and cooling unit 6 may be provided rearward of the engine 20, in that order. Further, the cooling system may be provided as stated above even when the engine 20 is provided rearward of the operator's seat 12. When the engine 20 is provided horizontally, the cooling system can also be provided horizontally.
(2) While the damper 74 is used to make the first cooler 6a swing smoothly, a stopper mechanism may be provided which maintains an inclined posture of the first cooler 6a. Further, the stopper mechanism may replace the damper 74.
(3) A lock mechanism, which is capable of temporarily holding the swing angle of the second cooler 6b relative to the first cooler 6a, may be provided to the swing connecting unit 8 which connects the first cooler 6a and the second cooler 6b.

In addition to tractors, the present invention can also be applied to agricultural vehicles such as rice transplanters and combines, and construction vehicles such as front loaders.

## Claims

1. A work vehicle comprising:
a vehicle body frame (10);
an engine (20) mounted to the vehicle body frame (10);
a cooling fan unit (4) provided on one side of the engine (20);
a coolant fluid radiator (5) provided on an opposite side of the cooling fan unit (4) with respect to the engine (20);
a cooling unit (6) provided on an opposite side of the coolant fluid radiator (5) with respect to the cooling fan unit (4); and
a link mechanism (7) connected to the cooling unit (6) and configured to allow a distance between the cooling unit (6) and the coolant fluid radiator (5) to be changed,
the link mechanism (7) has a pair of first link members (71) and a pair of second link members (72) ;
the cooling unit (6) has a first cooler (6a) and a second cooler (6b) ; **characterized in that**
the work vehicle further comprises a connecting unit (8) swingably connecting the bottom of the first cooler (6a) to the top of the second cooler (6b) about a swing axis (Px).

2. The work vehicle according to claim 1, wherein the pair of first link members has right-and-left upper link members (71) and the pair of second link members has right-and-left lower link members (72).

3. The work vehicle according to any one of claims 1 or 2, wherein
the cooling unit (6) is arranged in front of the coolant fluid radiator (5), and/or the engine (20) is arranged in a front of the vehicle body frame (10).

4. The work vehicle according to any one of claims 1 to 3, wherein the link mechanism (7) is further connected to the coolant fluid radiator (5).

5. The work vehicle according to claim 1, wherein
the second cooler (6b) is disposed below the first cooler (6a), and/or
a bottom of the first cooler (6a) is connected to a top of the second cooler (6b).

6. The work vehicle according to claim 1, wherein the swing axis (Px) is transverse to a front to back axis of the vehicle body frame (10).

7. The work vehicle according to any one of claims 1 to 6, wherein
the cooling unit (6) further comprises a third cooler (6c) disposed on an opposite side of the second cooler (6b) with respect to the coolant fluid radiator (5).

8. The work vehicle according to claim 7, wherein
said third cooler (6c) is connected to a bottom end of the first cooler (6a).

9. The work vehicle according to claim 1, wherein:
the pair of first link members (71) has:
first ends connected to the coolant fluid radiator (5) at first support points (P1); and
second ends connected to the first cooler (6a) at second support points (P2); and
the pair of second link members (72) has:
first ends connected to the coolant fluid radiator (5) at third support points (P3); and
second ends connected to the first cooler (6a) at a fourth support points (P4).

10. The work vehicle according to claim 9, wherein a distance between the first and third support points (P1, P3) is shorter than a distance between the second and fourth support points (P2, P4).

11. The work vehicle according to claim 9 or 10, wherein a distance between the first and second support points (P1, P2) is shorter than a distance between the third and fourth support points (P3, P4).

12. The work vehicle according to claim 9, 10 or 11, wherein a distance between the second and fourth support points (P2, P4) is shorter than at least one of:
a distance between the first and second support points (P1, P2); and
a distance between the third and fourth support points (P3, P4).

## Patentansprüche

1. Arbeitsfahrzeug, umfassend:
einen Fahrzeugkarosserierahmen (10),
einen Motor (20), der an dem Fahrzeugkarosserierahmen (10) befestigt ist,
eine Kühlgebläseeinheit (4), die auf einer Seite des Motors (20) bereitgestellt ist,
einen Kühlflüssigkeitskühler (5), der auf einer in Bezug auf den Motor (20) entgegengesetzten Seite der Kühlgebläseeinheit (4) bereitgestellt ist,
eine Kühleinheit (6), die auf einer in Bezug auf die Kühlgebläseeinheit (4) entgegengesetzten Seite des Kühlflüssigkeitskühlers (5) bereitgestellt ist,
einen Gelenkmechanismus (7), der mit der Kühleinheit (6) verbunden ist und dafür ausgelegt ist, eine Veränderung des Abstands zwischen der Kühleinheit (6) und dem Kühlflüssigkeitskühler (5) zu ermöglichen,
wobei der Gelenkmechanismus (7) ein Paar erster Gelenkelemente (71) und ein Paar zweiter Gelenkelemente (72) aufweist,
wobei die Kühleinheit (6) einen ersten Kühler (6a) und einen zweiten Kühler (6b) aufweist,
**dadurch gekennzeichnet, dass**
das Arbeitsfahrzeug ferner eine Verbindungseinheit (8) umfasst, die die Unterseite des erste Kühlers (6a) mit der Oberseite des zweiten Kühlers (6b) um eine Schwenkachse (Px) schwenkbar verbindet.

2. Arbeitsfahrzeug nach Anspruch 1, wobei das Paar erster Gelenkelemente rechte und linke obere Gelenkelemente (71) aufweist und das Paar zweiter Gelenkelemente rechte und linke untere Gelenkelemente (72) aufweist.

3. Arbeitsfahrzeug nach einem der Ansprüche 1 oder 2, wobei die Kühleinheit (6) vor dem Kühlflüssigkeitskühler (5) angeordnet ist und/oder der Motor (20) in einer Front des Fahrzeugkarosserierahmens (10) angeordnet ist.

4. Arbeitsfahrzeug nach einem der Ansprüche 1 bis 3, wobei der Gelenkmechanismus (7) ferner mit dem Kühlflüssigkeitskühler (5) verbunden ist.

5. Arbeitsfahrzeug nach Anspruch 1, wobei
der zweite Kühler (6b) unter dem ersten Kühler (6a) angeordnet ist und/oder
eine Unterseite des ersten Kühlers (6a) mit einer Oberseite des zweiten Kühlers (6b) verbunden ist.

6. Arbeitsfahrzeug nach Anspruch 1, wobei die Schwenkachse (Px) quer zu einer Front-Heck-Achse des Fahrzeugkarosserierahmens (10) verläuft.

7. Arbeitsfahrzeug nach einem der Ansprüche 1 bis 6, wobei
die Kühleinheit (6) ferner einen dritten Kühler (6c) umfasst, der auf einer in Bezug auf den Kühlflüssigkeitskühler (5) entgegengesetzten Seite des zweiten Kühlers (6b) angeordnet ist.

8. Arbeitsfahrzeug nach Anspruch 7, wobei
der dritte Kühler (6c) mit einem unteren Ende des ersten Kühlers (6a) verbunden ist.

9. Arbeitsfahrzeug nach Anspruch 1, wobei:
das Paar erster Gelenkelemente (71) aufweist:
erste Enden, die mit dem Kühlflüssigkeitskühler (5) an ersten Haltepunkten (P1) verbunden sind, und
zweite Enden, die mit dem ersten Kühler (6a) an zweiten Haltepunkten (P2) verbunden sind, und
das Paar zweiter Gelenkelemente (72) aufweist:
erste Enden, die mit dem Kühlflüssigkeitskühler (5) an dritten Haltepunkten (P3) verbunden sind, und
zweite Enden, die mit dem ersten Kühler (6a) an vierten Haltepunkten (P4) verbunden sind.

10. Arbeitsfahrzeug nach Anspruch 9, wobei ein Abstand zwischen den ersten und dritten Haltepunkten (P1, P3) kürzer als ein Abstand zwischen den zweiten und vierten Haltepunkten (P2, P4) ist.

11. Arbeitsfahrzeug nach Anspruch 9 oder 10, wobei ein Abstand zwischen den ersten und zweiten Haltepunkten (P1, P2) kürzer als ein Abstand zwischen den dritten und vierten Haltepunkten (P3, P4) ist.

12. Arbeitsfahrzeug nach Anspruch 9, 10 oder 11, wobei ein Abstand zwischen den zweiten und vierten Haltepunkten (P2, P4) kürzer als mindestens einer der Folgenden ist:
ein Abstand zwischen den ersten und zweiten Haltepunkten (P1, P2) und
ein Abstand zwischen den dritten und vierten Haltepunkten (P3, P4).

## Revendications

1. Véhicule de travail comprenant :
un châssis de véhicule (10) ;
un moteur (20) monté sur le châssis de véhicule (10) ;
une unité de ventilateur de refroidissement (4) prévue d'un côté du moteur (20) ;
un radiateur de fluide réfrigérant (5) prévu sur un côté opposé de l'unité de ventilateur de refroidissement (4) par rapport au moteur (20) ;
une unité de refroidissement (6) prévue sur un côté opposé du radiateur de fluide réfrigérant (5) par rapport à l'unité de ventilateur de refroidissement (4) ; et
un mécanisme de liaison (7) raccordé à l'unité de refroidissement (6) et configuré pour permettre de modifier une distance entre l'unité de refroidissement (6) et le radiateur de fluide réfrigérant (5),
le mécanisme de liaison (7) a une paire de premiers éléments de liaison (71) et une paire de seconds éléments de liaison (72) ;
l'unité de refroidissement (6) a un premier refroidisseur (6a) et un deuxième refroidisseur (6b) ;
**caractérisé en ce que** :
le véhicule de travail comprend en outre une unité de raccordement (8) raccordant, de manière oscillante, le fond du premier refroidisseur (6a) au sommet du deuxième refroidisseur (6b) autour d'un axe d'oscillation (Px).

2. Véhicule de travail selon la revendication 1, dans lequel la paire de premiers éléments de liaison a des éléments de liaison supérieurs droit et gauche (71) et la paire de seconds éléments de liaison a des éléments de liaison inférieurs droit et gauche (72).

3. Véhicule de travail selon l'une quelconque des revendications 1 ou 2, dans lequel :
l'unité de refroidissement (6) est agencée en face du radiateur de fluide réfrigérant (5), et/ou
le moteur (20) est agencé dans une partie avant du châssis de véhicule (10).

4. Véhicule de travail selon l'une quelconque des revendications 1 à 3, dans lequel le mécanisme de liaison (7) est en outre raccordé au radiateur de fluide réfrigérant (5).

5. Véhicule de travail selon la revendication 1, dans lequel :
le deuxième refroidisseur (6b) est disposé au-dessous du premier refroidisseur (6a), et/ou
un fond du premier refroidisseur (6a) est raccordé à un sommet du deuxième refroidisseur (6b).

6. Véhicule de travail selon la revendication 1, dans lequel l'axe d'oscillation (Px) est transversal par rapport à un axe avant - arrière du châssis de véhicule (10).

7. Véhicule de travail selon l'une quelconque des revendications 1 à 6, dans lequel :
l'unité de refroidissement (6) comprend en outre un troisième refroidisseur (6c) disposé sur un côté opposé du deuxième refroidisseur (6b) par rapport au radiateur de fluide réfrigérant (5).

8. Véhicule de travail selon la revendication 7, dans lequel :
ledit troisième refroidisseur (6c) est raccordé à une extrémité inférieure du premier refroidisseur (6a).

9. Véhicule de travail selon la revendication 1, dans lequel :
la paire de premiers éléments de liaison (71) a :
des premières extrémités raccordées au radiateur de fluide réfrigérant (5) au niveau de premiers points de support (P1) ; et
des secondes extrémités raccordées au premier refroidisseur (6a) au niveau de deuxièmes points de support (P2) ; et
la paire de seconds éléments de liaison (72) a :
des premières extrémités raccordées au radiateur de fluide réfrigérant (5) au niveau de troisièmes points de support (P3) ; et
des secondes extrémités raccordées au premier refroidisseur (6a) au niveau de quatrièmes points de support (P4).

10. Véhicule de travail selon la revendication 9, dans lequel une distance entre les premiers et troisièmes points de support (P1, P3) est plus courte qu'une distance entre les deuxièmes et quatrièmes points de support (P2, P4).

11. Véhicule de travail selon la revendication 9 ou 10, dans lequel une distance entre les premiers et deuxièmes points de support (P1, P2) est plus courte qu'une distance entre les troisièmes et quatrièmes points de support (P3, P4).

12. Véhicule de travail selon la revendication 9, 10 ou 11, dans lequel une distance entre les deuxièmes et quatrièmes points de support (P2, P4) est plus courte qu'au moins l'une parmi :
une distance entre les premiers et deuxièmes points de support (P1, P2) ; et
une distance entre les troisièmes et quatrièmes points de support (P3, P4).
